# EUROPEAN PATENT APPLICATION

(11) **EP 3 385 221 A1**
(43) Date of publication of application: **10.10.2018**
(21) Application number: 16834076.8
(22) Date of filing: 04.02.2016
(51) Int. Cl.: C01B 7/13

(54) **IODINE RECOVERY METHOD AND RECOVERY APPARATUS**

(71) Applicant: Central Chemical Inc., Tokyo 102-0085 (JP)
(72) Inventor: SUNAGAWA Shigeru, Tokyo 102-0085 (JP); EZAWA Haruo, Tokyo 102-0085 (JP); SUZUKI Naoko, Tokyo 102-0085 (JP)
(74) Representative: Blodig, Wolfgang
(86) International application number: PCT/JP2016/053325
(87) International publication number: WO 2017/134789

(57) **Abstract**

Provided is a technique for economically recovering iodine from an iodine-containing raw material in the form of a liquid, a suspension, or a solid containing iodine or an iodine compound, regardless of the form thereof, by an iodine recovery method characterized in that an iodine-containing raw material is sprayed into a combustion furnace and combusted so as to produce an iodine compound by adjusting the amount of air, and thereafter, a combustion gas is dissolved and absorbed in an aqueous solution containing a reducing agent, and an iodine recovery device which performs this method.

## Description

### Technical Field

The present invention relates to a method for economically recovering iodine and a recovery device by performing a thermal reaction treatment in a combustion furnace for an iodine-containing raw material in the form of a liquid, a suspension, or a solid containing iodine or an iodine compound, regardless of the form thereof.

### Background Art

Iodine has been used for a raw material, an intermediate, a catalyst, and the like for a pharmaceutical product, an X-ray contrast agent, an LCD, a feed additive, a bactericidal agent, a chemical product, and the like, and is a valuable resource on a global basis.

However, although iodine is used as a simple substance or a compound in the synthesis of a pharmaceutical product and the like, in the case where iodine is not contained in a final product even when iodine is involved with the synthesis, if iodine is not reused, iodine is disposed of as a waste liquid or a waste material as it is, which is a great loss from the economical viewpoint. Further, if the waste liquid and the waste material are left as they are, environmental pollution is caused, and also the natural environment is greatly affected.

Therefore, the recovery of valuable and expensive iodine from an iodine-containing raw material in the form of a liquid, a suspension, or a solid containing iodine or an iodine compound is a very important technique particularly for countries which do not have an iodine resource, and is very meaningful also from the viewpoint of economy, protection of natural environment, and resource saving.

Conventionally, various proposals for iodine recovery have been made, however, a current situation is that a specific method has not been established yet. In addition, an expensive material which is less susceptible to corrosion is used for the production of iodine, and therefore, such an expensive material is also needed for the recovery and reuse of iodine, and thus, the recovery and reuse of iodine have been considered to be difficult.

As a method for recovering and reusing iodine, for example, there has been proposed a method in which an iodine-containing material which contains iodine or an iodine compound is continuously fed to a combustion furnace to generate free iodine, and this free iodine is absorbed in an alkaline aqueous solution of sodium thiosulfate or sodium sulfite, whereby iodine is recovered (PTL 1), a method in which an alkali metal compound and a solvent are mixed in an iodine-containing material containing iodine or an iodine compound, and the resulting mixture is introduced into a combustion furnace including a combustion device and a thermal treatment is performed, and then, an iodine compound contained in the thermally treated gas is absorbed in an alkaline aqueous solution (PTL 2), or a method in which an iodine-containing solution, and a basic alkali metal compound solution, and/or a basic earth metal compound solution are separately fed to a roasting furnace by disposing spray nozzles at several places, a combustible material is combusted by a thermal treatment, and a component obtained by the thermal treatment is absorbed in water or an aqueous solution, whereby iodine is recovered (PTL 3).

However, in PTL 1 and PTL 2 among these patents, it is considered that (i) an iodine-containing material in a solid state or in a state in which a solid is suspended is not directly used, but is used by dissolving it, (ii) an absorbing solution is maintained at an alkaline pH, and iodine and hydrogen iodide are absorbed therein, (iii) since the carbon dioxide gas concentration is high, a large amount of an alkali is used for maintaining the solution at an alkaline pH, (iv) in the case where an alkali is sprayed in another system, when water is evaporated, a reaction of a solid alkali and iodine and hydrogen iodide does not easily proceed, and when the temperature is raised to a high level, HI is subjected to equilibrium dissociation to I₂, and therefore, the amount of generation of iodine is large, and thus, the amount of a reducing agent used is increased. Further, there is a disadvantage that the operation procedure is very complicated, and the like, and the methods are very uneconomical.

In PTL 3, it is a good method for performing an operation by disposing spray nozzles at several places, however, if one nozzle is clogged, the entire system is affected, resulting in stopping the operation, and therefore, a disadvantage that the operation procedure becomes complicated or the like is considered, and an iodine recovery liquid is affected, and in a worst case, there is a necessity of retreatment, and therefore, the method is very uneconomical. In addition, the quality of iodine to be produced from a purified liquid is not disclosed, and the method only simply recovers a solution of iodine. It is described that in this purified liquid, an undecomposed iodine-containing material was not detected, however, a lot of chemical products are used, and therefore, impurities are also increased accompanying this, and in a worst case, it is considered that a product which meets the standard specification cannot be obtained. When the product does not meet the standard specification, the product needs to be regenerated, and therefore, the method is uneconomical.

### Citation List

### Patent Literature

[PTL 1] JP-B-54-13234
[PTL 2] JP-B-6-157005
[PTL 3] Japanese Patent No. 5134951

### Summary of Invention

### Technical Problem

Accordingly, a technique for economically recovering iodine from an iodine-containing raw material in the form of a liquid, a suspension, or a solid containing iodine or an iodine compound, regardless of the form thereof, has been awaited.

### Solution to Problem

As a result of intensive studies in order to solve the above problems, the present inventors found that iodine can be efficiently recovered without adding any agent or the like by spraying an iodine-containing raw material in the form of a liquid, a suspension, or a solid containing iodine or an iodine compound into a combustion furnace, combusting the iodine-containing raw material so as to produce an iodine compound by adjusting the amount of air, and thereafter dissolving and absorbing a combustion gas in an aqueous solution containing a reducing agent, and thus completed the invention.

That is, the invention is directed to an iodine recovery method, characterized in that an iodine-containing raw material is sprayed into a combustion furnace and combusted so as to produce an iodine compound by adjusting the amount of air, and thereafter, a combustion gas is dissolved and absorbed in an aqueous solution containing a reducing agent.

Further, the invention is directed to an iodine recovery device, characterized in that the device includes:
a sprayer which sprays an iodine-containing raw material into a combustion furnace;
a combustion furnace which is capable of adjusting the amount of air; and
a reservoir tank for an aqueous solution containing a reducing agent, and
arrangement is made so that a combustion gas generated in the combustion furnace is dissolved and absorbed in the reservoir tank.

### Advantageous Effects of Invention

The iodine recovery method and recovery device of the invention can treat an iodine-containing raw material with one combustion furnace, regardless of a liquid, a suspension, or a solid, and therefore are economical.

Further, the iodine recovery method and recovery device of the invention perform combustion so as to produce an iodine compound by adjusting the amount of air, and therefore hardly produce iodine, and can suppress the reducing treatment of iodine small.

In addition, in the iodine recovery method and recovery device of the invention, a combustion gas is dissolved and absorbed in an aqueous solution containing a reducing agent without using an alkali which is a cause of damaging the furnace, and therefore, iodine can be recovered in a state where carbon dioxide gas is not absorbed.

### Brief Description of Drawings

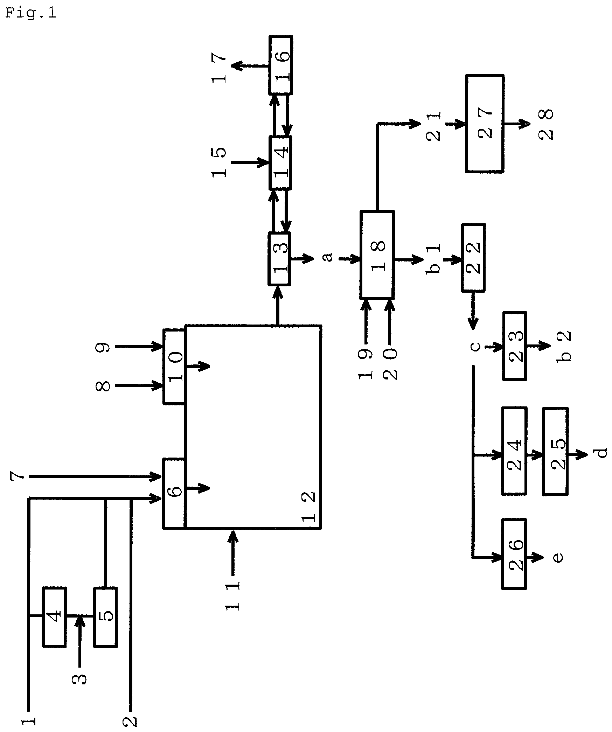

[Fig. 1] Fig. 1 is a view schematically showing the entire iodine recovery device of the invention.

### Description of Embodiments

The iodine recovery method of the invention (hereinafter referred to as "method of the invention") is configured such that an iodine-containing raw material is sprayed into a combustion furnace and combusted so as to produce an iodine compound by adjusting the amount of air, and thereafter, a combustion gas is dissolved and absorbed in an aqueous solution containing a reducing agent.

The iodine-containing raw material to be used in the method of the invention refers to a liquid, a suspension, or a solid containing iodine or an iodine compound. Specifically, a solution (hereinafter sometimes also referred to as "iodine-containing solution"), a slurry (hereinafter sometimes also referred to as "iodine-containing slurry"), a solid (hereinafter sometimes also referred to as "iodine-containing solid"), or the like containing iodine or an iodine compound such as an inorganic compound or an organic compound containing iodine, which is used for a main component, a catalyst, or the like in a step of producing an X-ray contrast agent, a pharmaceutical product such as Flucanazole, Cefixime, or Simvastatin, or a step of producing a bactericidal agent or a step of producing a semiconductor and is subjected to a disposal treatment after use is used as it is or is formed into a liquid, a suspension, or a solid by appropriately dissolving or grinding in consideration of various physical properties. By using such an iodine-containing raw material, the material can be treated by one combustion furnace.

Among these iodine-containing raw materials, as the liquid containing iodine or an iodine compound, a solution containing iodine or an iodine compound can be used as it is or can be used by appropriately diluting it.

Further, the suspension containing iodine or an iodine compound can be prepared by grinding a slurry or a solid containing iodine or an iodine compound, and dissolving the resulting material in, for example, a solvent such as water, methanol, or ethanol. The degree of grinding is not particularly limited, however, for example, grinding is performed so that the particle diameter of the solid component in the suspension is 100 µm or less, preferably 50 µm or less. Incidentally, this particle diameter is measured using a standard sieve.

Further, as the solid containing iodine or an iodine compound, the solid containing iodine or an iodine compound can be used as it is or ground, and then, can be prepared by drying a solution or a slurry containing iodine or an iodine compound, and thereafter using the dried material as it is or grinding the dried material. The degree of grinding is not particularly limited, however, for example, grinding is performed so that the particle diameter of the solid is 100 µm or less, preferably 50 µm or less. Incidentally, this particle diameter is measured using a standard sieve.

Among these iodine-containing raw materials, when the solid containing iodine or an iodine compound is used, heat for evaporating water in the solvent or the like is not needed, and therefore, a fuel for maintaining the temperature in the furnace can be saved, and therefore, the solid is preferred.

The concentration of iodine or an iodine compound in such an iodine-containing raw material is not particularly limited, but is, for example, 1% or more, preferably from 4 to 30 mass% (hereinafter simply referred to as "%") in terms of iodine.

Such an iodine-containing raw material is sprayed into a combustion furnace and combusted so as to produce an iodine compound by adjusting the amount of air, preferably combusted so as to produce hydrogen iodide without producing free iodine. The phrase "combusted so as to produce hydrogen iodide without producing free iodine" means, for example, that a chemical reaction as represented by the following formulae (1) to (3) is caused in the combustion furnace.
[Chem. 1]

CH₃I + 2H₂O → HI + CO₂ + 3H₂ (1)

I₂ + H₂ ⇔ 2HI (2)

2H₂ + O₂ → 2H₂O (3)

The combustion furnace to be used in the method of the invention is not particularly limited, and for example, a combustion furnace such as a fixed-bed furnace or a waste liquid combustion furnace can be used. The introduction of air into the combustion furnace is performed through a valve or the like attached to the combustion furnace, and the amount of air can be adjusted by the valve or the like. The amount of air to cause a chemical reaction as described above can be appropriately set by a combustion gas analysis or the visual observation of the flame color because the flame color when iodine is combusted is purple. A more specific amount of air is set to 1.4 times the theoretical amount of air with respect to carbon and hydrogen as combustible components in the iodine-containing raw material. If a component which is hardly combusted is contained in the iodine-containing raw material, the amount of air may be set to 1.5 times or more the theoretical amount of air with respect to carbon and hydrogen as combustible components. In addition, during combustion, liquefied petroleum gas (LPG) or the like is used as a fuel.

The method for spraying the iodine-containing raw material into the combustion furnace is not particularly limited, and for example, in the case where the iodine-containing raw material is a liquid or a suspension, a liquid sprayer can be used. In addition, in the case where the iodine-containing raw material is a liquid, a suspension, or a solid, a powder sprayer can be used. The iodine-containing raw material may be sprayed into the combustion furnace through a nozzle or the like from such a sprayer. Incidentally, among these sprayers, if a powder sprayer is used, the iodine-containing raw material in the form of a liquid, a suspension, or a solid can be sprayed by one sprayer, and therefore, the powder sprayer is preferred. Examples of such a powder sprayer include a ring nozzle jet-type powder disperser. Incidentally, in the case where hydrogen for generating hydrogen iodide is lacking, water may be additionally sprayed into the combustion furnace during combustion.

The combustion furnace is brought to a state of being heated to a constant temperature, for example, in the range of 600 to 1000°C, preferably in the range of 700 to 900°C, and the pressure in the combustion furnace is set to a negative pressure, for example, in the range of 29.4 to 98.0 Pa, preferably about 49.0 Pa so that a combustion product is not discharged at all to the outside of the system. Incidentally, when the pressure in the combustion furnace is a negative pressure, for example, in the case where a spray nozzle for a liquid is exchanged for a spray nozzle for a solid, air is drawn in without blowing out hot air, and therefore, a combustion nozzle can be exchanged or cleaned safely and in a short time without stopping the operation of the combustion furnace, and therefore, the maintenance of the combustion furnace is easy. On the other hand, in the case of a conventional submerged combustion system, the inside of the furnace is pressurized, and therefore, in the case where a breakdown occurs due to clogging of a nozzle or the like, the operation must be stopped once.

Incidentally, there is a disadvantage that when an alkali metal is present, carbon dioxide gas in a combustion gas is absorbed during combustion. In addition, when an aqueous solution or the like of an alkali metal is directly sprayed into the combustion furnace, it reacts with carbon dioxide gas and is converted to sodium carbonate or the like in a stable form, and it may not be effective in the production of an iodine compound. Moreover, sodium carbonate sometimes acts as a melting agent for a material of the furnace when the treatment temperature is high, and thus, the service life of the furnace may be decreased. Further, a disadvantage that when an alkaline earth metal is present, an alkaline earth metal carbonate which is sparingly soluble is formed to cause scales in a device in each part is considered. Due to this, it is preferred that an alkali metal or an alkaline earth metal is not present in the combustion of the method of the invention.

In the method of the invention, the reason why a combustion gas generated by combustion is dissolved and absorbed in an aqueous solution containing a reducing agent is because iodine and hydrogen iodide in the combustion gas are in an equilibrium relationship with each other, and therefore, iodine is not completely converted to hydrogen iodide, and thus, the residual iodine gas is reduced to hydrogen iodide with the reducing agent. The formula of the equilibrium relationship between iodine and hydrogen iodide is represented by the formula (4). This reaction largely depends on the temperature.
[Chem. 2]

2HI ⇔ H₂ + I₂ is absorbed (4)

In the method of the invention, a method for dissolving and absorbing a combustion gas generated by combustion in an aqueous solution containing a reducing agent is not particularly limited, and for example, the combustion gas may be introduced into a reservoir tank for the aqueous solution containing a reducing agent of an absorption tower or the like after cooling or the like as needed. Incidentally, before this dissolution and absorption, most of the hydrogen iodide and the iodine compound in the combustion gas may be recovered by cooling in a quench tower or the like.

The reducing agent to be used in the above process is not particularly limited, and examples thereof include sodium sulfite, sodium bisulfite, and hydrazine. Among these reducing agents, one type or two or more types can be used. The concentration of the reducing agent in the aqueous solution containing such a reducing agent is not particularly limited, but is, for example, from 10 to 30%, preferably about 20%.

Among these reducing agents, sodium sulfite is preferred because the handling thereof is easy. A reaction of dissolution and absorption in the case of using sodium sulfite as the reducing agent is, for example, represented by the formula (5).
[Chem. 3]

I₂ + Na₂SO₃ + H₂O → 2HI + Na₂SO₄ (5)

The pH of the aqueous solution containing a reducing agent is preferably maintained at neutral pH or below, particularly preferably maintained at a slightly acidic pH to neutral pH in the range of 3 to 8 in order to bring the solution to a state where carbon dioxide gas present in the combustion gas is hardly absorbed therein. Here, by setting the pH to a slightly acidic pH, the amount of an acidic substance or the like to be used in a subsequent purification procedure can be reduced, and therefore, such a pH is preferred.

In order to maintain the pH of the aqueous solution containing a reducing agent in the above-mentioned range, a reducing agent or an alkaline substance may be appropriately added while measuring a pH or an oxidation-reduction potential (ORP) .

In this manner, in the aqueous solution containing a reducing agent, iodine or an iodine compound is dissolved and absorbed. It is preferred that the recovered iodine or iodine compound is further purified as described below and obtained as an iodine crystal.

In order to obtain an iodine crystal, the pH of the aqueous solution containing a reducing agent, in which iodine or an iodine compound is dissolved and absorbed, is made acidic, preferably is decreased to 2.5 or less using an acidic substance or the like, and thereafter, further an oxidizing agent may be added thereto while measuring an ORP until an iodine crystal is obtained. Examples of the acidic substance used here include sulfuric acid and hydrochloric acid. Further, examples of the oxidizing agent include chlorine, hydrogen peroxide, and sodium hypochlorite. A reaction in which hydrogen iodide is converted to an iodine crystal is, for example, represented by the formula (6).
[Chem. 4]

2HI + Cl₂ = I₂↓ + 2HCl (6)

The iodine crystal deposited as described above can be separated by a separation method such as filtration, centrifugation, or distillation.

Incidentally, with respect to the waste liquid after separating the iodine crystal, for example, free iodine dissolved therein is adsorbed onto an adsorbent such as ion exchange resin or activated charcoal, and thereafter desorbed with an aqueous solution containing sodium sulfite, sodium hydroxide, or the like, whereby a small amount of iodine remaining in the waste liquid can be recovered.

Further, the iodine crystal separated as described above is transformed into liquid iodine by melting at a temperature equal to or higher than the melting point of iodine, and impurities are separated by utilizing a specific gravity difference between liquid iodine and impurities, whereby liquid iodine with high purity can be obtained. This liquid iodine is preferably further purified as described in the following (a) to (c).
(a) The liquid iodine is transformed into solid iodine by cooling. The method for cooling the liquid iodine is not particularly limited, and for example, the liquid iodine may be introduced into a vessel cooled indirectly with water or the like.
(b) After the liquid iodine is cooled by being added dropwise into water, water is removed by centrifugation or the like, whereby solid iodine with an irregular spherical shape is formed. The solid iodine with an irregular spherical shape is economical in the case where it is used in a chemical reaction which is not affected by water.
(c) The liquid iodine is reacted while being introduced into an aqueous solution of a metal hydroxide, and iodine is recovered as a metal iodide. Examples of the metal hydroxide include sodium hydroxide and potassium hydroxide. Such a method is economical because handling is easier than in the case where a metal iodide is produced using iodine which is once transformed into a solid.

The method of the invention described above can be performed by an iodine recovery device, which includes
a sprayer which sprays an iodine-containing raw material into a combustion furnace,
a combustion furnace which is capable of adjusting the amount of air, and
a reservoir tank for an aqueous solution containing a reducing agent, and
arrangement is made so that a combustion gas generated in the combustion furnace is dissolved and absorbed in the reservoir tank.

Hereinafter, the description of the invention will be continued with reference to the drawing (Fig. 1) showing one embodiment of the iodine recovery device of the invention.

In a combustion device 10 capable of adjusting the amount of a fuel 8 or air 9, the temperature of a combustion furnace 12 is maintained at 800°C or higher in advance. Subsequently, an iodine-containing raw material is sprayed into the combustion furnace 12 by a sprayer 6 through air 7. In the case where the iodine-containing raw material is an iodine-containing solid or slurry 1, the raw material is used as it is or after it is ground by a grinder 4 and transformed into a suspension by adding water 3 thereto in a mixing tank 5. Further, in the case where the iodine-containing raw material is an iodine-containing liquid 2, the raw material is used as it is.

The amount of the air 9 is adjusted so as to produce hydrogen iodide from the iodine-containing raw material in the combustion furnace 12, and a combustible material is completely combusted. The combustion gas generated by complete combustion is quenched to 80°C or lower in a quench tower 13. At the same time, most of the hydrogen iodide and the iodine compound are dissolved and absorbed. A solution obtained in the quench tower 13 is recycled and used in the quench tower 13 for cooling the combustion gas at a high temperature from the combustion furnace 12.

Iodine which could not be absorbed in the quench tower 13 is dissolved and absorbed in an absorption tower 14 which is a reservoir tank for an aqueous solution containing a reducing agent. In the absorption tower 14, water (not shown) and a reducing agent 15 are added so as to make the iodine concentration, pH and ORP constant. The combustion gas passing through the absorption tower 14 is made to pass through an exhaust gas treatment facility 16 and discharged to the atmosphere as an exhaust gas 17. The main components of the exhaust gas are nitrogen, oxygen, and carbon dioxide gas.

An absorbing liquid in the absorption tower 14 passes through the quench tower 13 and is cooled and recovered as an iodine recovery liquid a thereof.

The iodine recovery liquid a is a solution which contains hydriodic acid and an iodide and is slightly acidic to neutral. This liquid is transferred to a reaction precipitation tank 18, an acidic substance 19 is added thereto to make the pH acidic, and thereafter, an oxidizing agent 20 is blown therein to perform oxidation, whereby an iodine crystal b1 is deposited and precipitated.

In a supernatant (waste liquid 21) after the iodine crystal b1 is precipitated, a small amount of iodine is dissolved, and therefore, a treatment is performed in a drainage treatment facility 27 provided with an adsorption unit (not shown) and a drainage treatment tank (not shown), and iodine is recovered, and thereafter, a treatment of adjusting the pH and ORP is performed so as to adjust the pH and ORP to be not more than the regulatory values for drainage in the end, and the waste liquid is discharged as drainage 28. The drainage 28 contains sodium chloride and sodium sulfate as the main components.

The iodine crystal b1 precipitated in the reaction precipitation tank 18 contains water, sodium chloride, sodium sulfate, and other impurities, and therefore is transferred to a melting vessel 22 and heated to a temperature equal to or higher than the melting point of iodine. The heated iodine crystal b1 is transformed into liquid iodine c with high purity by gravity separation of water and impurities.

The liquid iodine c can be further purified as described in the following (a) to (c).
(a) The liquid iodine c is introduced into a reaction unit 26 in which an aqueous solution of a metal hydroxide is placed to produce a metal iodide e, and iodine is recovered.
(b) The liquid iodine c is solidified by being introduced into a cooled solidification vessel 23, and iodine is recovered as an iodine crystal b2.
(c) The liquid iodine c is solidified by being added dropwise into a water-cooled vessel 24 in which water is placed, and further water is removed by a centrifuge 25, whereby water-containing iodine with an irregular spherical shape d can also be obtained. This water-containing iodine with an irregular spherical shape d contains a small amount of water, but can be used in the production of an iodine compound or the like, in which the reaction is not affected even if water is contained.

### Examples

Hereinafter, the invention will be described in detail by showing Examples, however, the invention is by no means limited to these Examples.

### Example 1

LPG gas was fed to a combustion device at 2 m³/hr as fuel, and the temperature of a combustion furnace was maintained at 800°C. Subsequently, an iodine-containing solution having a composition of 10% sodium iodide, 8% isopropyl alcohol, 6% methanol, and 76% water was sprayed into the combustion furnace at 13 L/hr through a nozzle from a liquid sprayer, and combusted so as to produce an iodine compound by adjusting the amount of air (95 m³/hr). A combustion gas was quenched in a quench tower, and further made to pass through an absorption tower and an exhaust gas treatment facility, and then, discharged to the atmosphere as an exhaust gas. The temperature of the exhaust gas was 50°C, the flow rate was 110 m³/hr, and the oxygen concentration was 7%. Into the absorption tower, sodium sulfite was fed so as to make the ORP constant. At this time, the pH of an iodine recovery liquid was 3.6 and the ORP was 82 mV. The concentration of iodine in the exhaust gas was 13 mg/ m³, and the loss of iodine was 0.05%. The amounts of the components in the exhaust gas were all not more than the regulatory values for exhaust gas.

Subsequently, the iodine recovery liquid extracted from the quench tower was placed in a reaction precipitation tank, and the pH thereof was decreased to 2.5 by adding sulfuric acid thereto, and an iodine crystal was deposited and precipitated by gradually adding chlorine gas thereto. At this time, the ORP was 620 mV and the pH was 2.0.

The waste liquid after separating the iodine crystal was treated in a drainage treatment facility provided with an adsorption unit and a drainage treatment tank to adsorb free iodine dissolved in the waste liquid, and thereafter, a treatment of adjusting the pH or the like was performed by adding sodium hydroxide and sodium sulfite thereto, and the liquid was discharged as drainage. At this time, the pH was 6.8, the ORP was 200 mV, and the loss of iodine was 0.01%. Further, the amounts of the components in the drainage were all not more than the regulatory values for water quality. From the adsorbent in the adsorption unit, onto which iodine was adsorbed, iodine was desorbed and recovered with an aqueous solution of sodium sulfite or the like, and also the adsorbent was regenerated and thus could be reused.

Subsequently, the separated iodine crystal was transferred to a melting vessel and transformed into liquid iodine by heating such that the temperature of the vessel was increased to a temperature equal to or higher than the melting point of iodine. The liquid iodine was introduced into a cooled solidification vessel from the melting vessel, whereby an iodine crystal was obtained. The purity of this iodine crystal was 99.6%.

The loss of iodine was 0.1%, which was obtained by adding up the amount of iodine in the exhaust gas and the amount of iodine in the drainage. This result showed that according to the invention, iodine is recovered in high yield.

### Example 2

A slurry containing an organic iodine compound having an iodine concentration of 28%, a TOC concentration of 14%, and a water content of 40%, and containing trimethylsulfoxonium iodide as a main component was ground by a grinder so that the particle diameter of the solid components contained therein was 45 µm or less, and thereafter, water was added thereto, and an iodine-containing suspension (iodine concentration: 15%) was prepared in a mixing tank. This suspension was sprayed at 7 L/hr through a nozzle from a powder sprayer into a combustion furnace in which a negative pressure was created, and combusted so as to produce an iodine compound by adjusting the amount of air (85 m³/hr). The amount of LPG used was 1.8 m³/hr, and the combustion temperature was 760°C. The other steps were performed in the same manner as in Example 1, whereby liquid iodine was obtained. This liquid iodine was introduced into a cooled solidification vessel, whereby an iodine crystal was obtained. The purity of this iodine crystal was 99.5%.

Part of the thus obtained liquid iodine was added dropwise into a water-cooled vessel in which water was placed, and the resulting mixture was centrifuged by a centrifuge, whereby water-containing iodine with an irregular spherical shape was obtained. The water-containing iodine with an irregular spherical shape had a purity of 98.2% and a water content of 1.4%. The loss of iodine was 0.2%, which was obtained by adding up the amount of iodine in the exhaust gas and the amount of iodine in the drainage, and thus, iodine could be recovered in high yield. Further, at this time, the amounts of the components in the exhaust gas were all not more than the regulatory values for exhaust gas, and the amounts of the components in the drainage were all not more than the regulatory values for water quality.

### Comparative Example 1

Sulfuric acid was added to the iodine-containing solution used in Example 1 to decrease the pH to 2, and oxidation was performed by blowing chlorine gas therein, however, an iodine crystal was not deposited, but only the color of the solution changed to brown, and iodine could not be recovered.

### Comparative Example 2

Sulfuric acid was added to the iodine-containing suspension used in Example 2 to decrease the pH to 2, and oxidation was performed by blowing chlorine gas therein, however, an iodine crystal was not deposited, and also the suspension did not change, and iodine could not be recovered.

### Industrial Applicability

According to the invention, recovery can be economically performed from an iodine-containing raw material in the form of a liquid, a suspension, or a solid containing iodine or an iodine compound, regardless of the form thereof.

### Reference Sings List

1: iodine-containing solid or slurry
2: iodine-containing solution
3: water
4: grinder
5: mixing tank
6: sprayer
7: air
8: fuel
9: air
10: combustion device
11: water
12: combustion furnace
13: quench tower
14: absorption tower
15: reducing agent
16: exhaust gas treatment facility
17: exhaust gas
18: reaction precipitation tank
19: acidic substance
20: oxidizing agent
21: waste liquid
22: melting vessel
23: solidification vessel
24: water-cooled vessel
25: centrifuge
26: reaction unit
27: drainage treatment facility
28: drainage
a: iodine recovery liquid
b1: iodine crystal
b2: iodine crystal
c: liquid iodine
d: water-containing iodine with irregular spherical shape
e: metal iodide

## Claims

1. An iodine recovery method, **characterized in that** an iodine-containing raw material is sprayed into a combustion furnace and combusted so as to produce an iodine compound by adjusting the amount of air, and thereafter, a combustion gas is dissolved and absorbed in an aqueous solution containing a reducing agent.

2. The iodine recovery method according to claim 1, wherein the iodine-containing raw material is a liquid containing iodine or an iodine compound.

3. The iodine recovery method according to claim 1, wherein the iodine-containing raw material is a suspension containing iodine or an iodine compound, and the particle diameter of a solid component in the suspension is 50 µm or less.

4. The iodine recovery method according to claim 1, wherein the iodine-containing rawmaterial is a solid containing iodine or an iodine compound, and the particle diameter of the solid is 50 µm or less.

5. The iodine recovery method according to any one of claims 1 to 4, wherein the reducing agent is one or two or more members selected from the group consisting of sodium sulfite, sodium bisulfite, and hydrazine.

6. The iodine recovery method according to any one of claims 1 to 5, wherein a negative pressure is created in the combustion furnace.

7. The iodine recovery method according to any one of claims 1 to 6, wherein the pH of the aqueous solution after dissolution and absorption is made acidic, and thereafter, an oxidizing agent is added thereto, whereby an iodine crystal is deposited.

8. The iodine recovery method according to claim 7, wherein the iodine crystal is melted at a temperature equal to or higher than the melting point of iodine and recovered as liquid iodine by separating impurities utilizing a specific gravity difference.

9. The iodine recovery method according to claim 8, wherein the liquid iodine is cooled and recovered as solid iodine.

10. The iodine recovery method according to claim 8, wherein the liquid iodine is cooled by being added dropwise into water and thereafter recovered as solid iodine with an irregular spherical shape by removing water.

11. The iodine recovery method according to claim 8, wherein the liquid iodine is cooled in an aqueous solution containing a metal hydroxide and recovered as a metal iodide.

12. An iodine recovery device, **characterized in that** the device comprises:
a sprayer which sprays an iodine-containing raw material into a combustion furnace;
a combustion furnace which is capable of adjusting the amount of air; and
a reservoir tank for an aqueous solution containing a reducing agent, and
arrangement is made so that a combustion gas generated in the combustion furnace is dissolved and absorbed in the reservoir tank.
